# EUROPEAN PATENT SPECIFICATION

(11) **EP 3 261 472 B1**
(45) Date of publication and mention of the grant of the patent: **03.06.2020**
(21) Application number: 15830857.7
(22) Date of filing: 22.12.2015
(51) Int. Cl.: A41H 43/04, D06H 5/00, B29C 65/10, B29C 65/48

(54) **SEALING MACHINE FOR TEXTILE ARTICLES OF MANUFACTURE**
SIEGELVORRICHTUNG FÜR TEXTILERZEUGNISSE
MACHINE À SCELLER DE MANIÈRE ÉTANCHE POUR ARTICLES TEXTILES MANUFACTURÉS

(30) Priority: 27.02.2015 IT MI20150304
(43) Date of publication of application: 03.01.2018
(73) Proprietor: FRAMIS ITALIA S.P.A., 20124 Milano (IT)
(72) Inventor: PRIZZON, Luca, 21013 Gallarate (Varese) (IT)
(74) Representative: Tansini, Elio Fabrizio
(86) International application number: PCT/IB2015/059873
(87) International publication number: WO 2016/135543

(56) References cited:
- EP-A2- 2 366 297
- WO-A1-2004/099488
- GB-A- 2 367 784
- JP-A- H1 158 520
- JP-A- H11 207 824
- US-A- 4 683 593
- US-A- 6 098 684
- US-A1- 2012 318 454

## Description

The object of the present invention is a sealing machine for textile articles of manufacture.

The present invention finds particular application in industrial processes for the application of adhesive or heat sealed tapes, for example along the edges of textile articles of manufacture or along previously made seams, so as to obtain a stable mutual union between the articles of manufacture themselves, and/or for seam waterproofing or protection, and/or for simple aesthetic purposes.

For the purposes of this description and of the following claims, the expression "article of manufacture" encompasses, for example, woven fabrics, non-woven fabrics, synthetic membranes and the like, and more generally the products or semi-finished products employed within the scope of the clothing and industrial textile product industry.

GB 2 367 784 A discloses a machine for welding plastic laminates of large dimensions, along substantially straight trajectories. Additional examples of heat-sealing or ultrasonic welding appliances are derivable from US-6,098,684 A, JP-H11-207824 A, JP-H11-58520 A , US-2012/318454 A1, WO-2004/099488 A1 and US-4,683,593 A .

Sealing machines for textile articles of manufacture generally include a support frame defining a work bench. A support upright having a substantially L-shaped conformation develops above the work bench. The support upright supports a heater unit, generally of the type suitable to deliver a stream of hot air.

A conveying group, generally comprising two facing rollers, engages the article of manufacture being processed in order to feed it at a controlled rate during processing. More particularly, a first roller, or lower roller, keyed to the end a motorized drive shaft, in turn housed inside a supporting arm, and a second or upper, idle steering roller terminally supported by the support upright in a thrust relationship towards the lower roller.

A heat-sealable tape having a heatfix agent is slidably guided up to near the conveyor rollers through a suitably shaped guide, having an outlet end located behind the rollers themselves.

During the operation, the article of manufacture is advanced jointly to the tape between the conveyor rollers. Simultaneously, the heating unit directs the flow of hot air on the tape near the guide, next to the area in which the tape itself and the article of manufacture, mutually coupled, are inserted between the conveyor rollers.

The subsequent heating determines the activation of the heatfix agent, so that the action of pressure due to the forced passage of the tape and the article of manufacture between the conveyor rollers determines their stable, mutual coupling.

The applicant has noted, however, that the use of sealing machines made according to the known art often makes it difficult to achieve optimal processing when sealing along paths with loops and very pronounced curves is required, as may occur, for example, when processing articles of manufacture employed to make footwear, orthopaedic items, linings of three-dimensional objects or other items.

In fact, while sealing along straight or extensively curved stretches can be performed rapidly and easily, tortuous paths with narrow-radius curves require a remarkable ability of the operator, as well as a significant reduction of the processing speed.

The need to reduce the feed speed of the article of manufacture does not merely determine a reduced productivity.

It is also necessary to reduce the feed speed of heat-sealable tape, resulting in an increase of time required for the tape itself to travel along the length separating the operating area of the heating unit from the operating area of the conveyor rollers, in which the application of the tape is realized. It is also necessary to mitigate the heating action exerted on the tape by the heating unit, so as to avoid overheating of the tape itself. It follows that when speed falls below a certain threshold, the proper application of the tape is severely compromised, because the latter tends to cool excessively before reaching the operating area of the rollers.

Due to these circumstances, performing close-radius curves and/or particularly tortuous paths is often impossible or not practicable at acceptable costs.

Hence, there is the need for a sealing machine lending itself to perform this processing rapidly and optimally, even on articles of manufacture having a complex geometry and/or requiring the execution of sealing along tortuous paths and/or paths with narrow-radius curves.

The main object of the present invention is substantially to meet the above-described need.

More in particular, it is an object of the invention to propose a machine which is suitable to perform processing in a simple, reliable and fast way, also along tortuous paths and/or paths with close-radius curves.

To this end, the applicant considers that, in terms of difficulty of performance of close-radius curves, the retaining action exerted on the article of manufacture by conveyor rollers, cooperating on the same in a mutual contrast relationship, plays an essential role.

In accordance with the present invention, it was observed that this retaining action tends to increase with the increasing size of the diameter of the conveyor rollers; this has led to realize that the use of conveyor rollers having a suitably contained diameter can determine an advantageous increase in ease of handling of the article of manufacture during processing, thus aiding the execution of sealing along tortuous trajectories.

In particular, the object of the present invention is a sealing machine for textile articles of manufacture, according to claim 1.

According to the applicant, using a carrier roller having a diameter smaller than 20 mm, compared to usual diameter size of not less than 50 mm, improves the handling of the article of manufacture during processing to allow performance of sealing also along very tortuous paths and paths with close-radius curves, without compromising quality during processing.

In accordance with examples of a preferred embodiment, the invention may also exhibit one or more of the following preferred features.

Preferably, the second conveyor member comprises a second roller.

Preferably, each of said first and second roller operates on the article of manufacture being processed by a respective dragging surface having a diameter smaller than 20 mm.

Preferably, the first roller is rotatably engaged to one end of said arm, according to a rotation axis parallel to a longitudinal development direction of the arm.

Preferably, the first roller overhangs from said end of the arm.

Preferably, the first roller is attached to a transmission shaft projecting externally from said end of the arm.

Preferably, the diameter of the dragging surface of the first roller is smaller, preferably less than ½, than a diametrical dimension of the arm at said end.

Preferably, said kinematic transmission members comprises toothed wheels.

Preferably, the first roller is operatively carried by a terminal head cantilevered to the end of the arm.

Preferably, the kinematic transmission members are housed in said terminal head.

Preferably, the terminal head is removably attached to the arm.

Preferably, the terminal head has a concave portion located behind the first roller, upstream thereof with reference to a feed direction of the article of manufacture during processing.

Preferably, a tangency plane common to the first and second conveyor member in their mutual contact area is tangent or spaced by said arm in the proximity of said end.

Preferably, a rotation axis of the first conveyor roller is arranged between a geometric rotation axis of the drive shaft and a tangency plane common to the first and second conveyor member in their mutual contact area.

Preferably, a feed guide is provided for at least one sealable tape, having an outlet end disposed adjacent to the conveyor members and facing them.

Preferably, the outlet end of the feed guide is located at a distance of no more than 20 mm from a plane containing the rotation axes of the first and second roller.

Preferably, the outlet end of the feed guide is located at a distance of no more than 5 mm from the conveyor members.

More particularly, the outlet end of the feed guide is located at a distance of no more than 5 mm from the dragging surface of at least one of the rollers, and preferably brushing against it.

Also preferably provided is a heating unit operating close to the outlet end of the feed guide for determining the activation of at least one heat-sealable element to fit to the article of manufacture being processed at the conveying group.

Further characteristics of the advantages will become more apparent from the detailed description of one preferred, but not exclusive, execution of a sealing machine for textile articles of manufacture, in accordance with the present invention.

Such description will be set forth hereinafter with reference to the accompanying drawings given only for illustrative purposes and not by way of limitation, in which:
- Figure 1 shows a perspective view of a sealing machine for textile articles of manufacture, in accordance with the present invention;

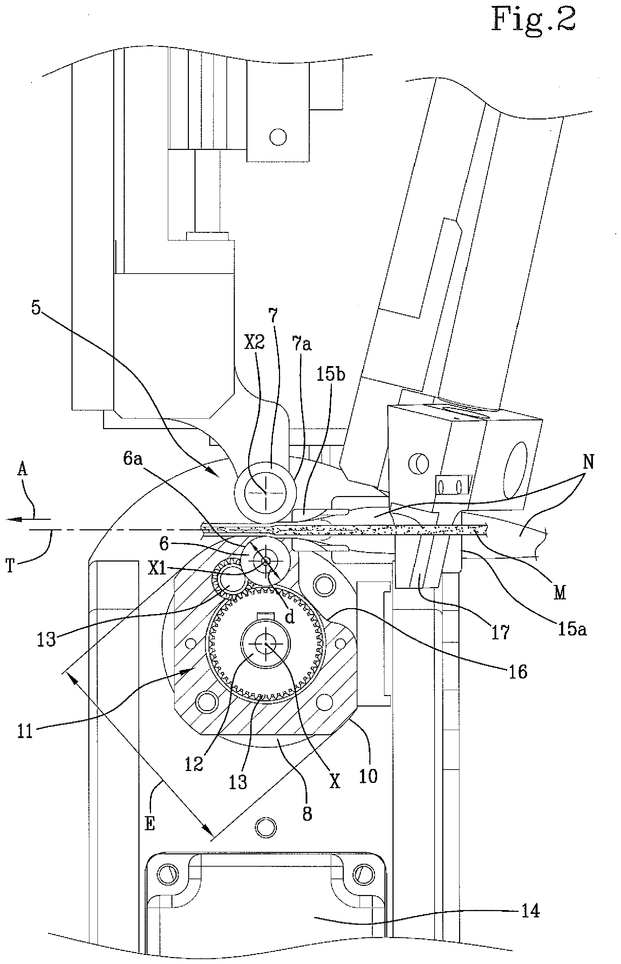

- Figure 2 shows a detail of the sealing machine, highlighting the conveying group in side view and in enlarged scale relative to Figure 1.

With reference to the accompanying figures, number 1 globally indicates a sealing machine for textile articles of manufacture, in accordance with the present invention.

The sealing machine 1 comprises a base (not shown) bearing a worktop 2. A column 3, supporting an upper beam 4 in a cantilever fashion, rises from worktop 2. The upper beam 4 extends horizontally above the worktop 2.

A conveying group 5 comprises a first conveyor member 6 and a second conveyor member 7, preferably cooperating with each other in a thrust relationship, for translating an article of manufacture "M" being processed according to a predetermined feed direction "A."

More particularly, the first conveyor member includes a first roller 6. Preferably, the second conveyor member includes in turn a second roller 7.

Preferably, the first roller 6 is rotatably carried by an arm 8 overhanging from column 3 or another fixed structure. Alternatively, the first roller 6 may e.g. be engaged to an arm 8 rising from worktop 2.

More particularly, the first roller 6 overhangs from and is rotatably engaged at one end 8a of arm 8, opposite to column 3, according to a rotation axis ("X₁") parallel to a longitudinal development direction of arm 8 itself.

The first roller 6, and preferably also the second roller 7, work against the article of manufacture "M" by its dragging surface 6a, 7a having a diameter "d" smaller than a diametrical dimension of the arm 8 at said end 8a. In a preferred example the dragging surface 6a of the first roller 6 has a diameter "d" smaller than ½ of diametrical dimension "E" of the arm 8 at said end 8a.

More particularly, it is preferable that diameter "d" of the dragging surface 6a of the first roller 6, and preferably also that of roller 7, does not exceed 20 mm. In a preferred embodiment, diameter "d" of dragging surface 6a and/or 7a of the first roller 6 and/or the second roller 7 is less than 15 mm, for example 12 mm.

The dragging surface 6a and/or 7a of the first roller 6 and/or the second roller 7 can be made of metallic material, possibly knurled in order to improve gripping on the article of manufacture "M". Alternatively, the dragging surface 6a and/or 7a of the first roller 6 and/or the second roller 7 can be made of or coated with elastomeric material, such as silicone rubber. In a preferred embodiment, the dragging surface 6a of the first roller 6 is made of a metallic, knurled material, and the dragging surface 7a of the second roller 7 is coated with a silicone rubber-based material.

The first roller 6 overhangs from the end 8a of arm 8, and may be coaxially keyed on a transmission shaft 9 projecting externally with respect to the arm 8 itself. In a preferred embodiment, the transmission shaft 9 is engaged with and overhangs from a terminal head 10, rigidly engaged to the end 8a of the arm 8 on the continuation of the latter.

Kinematic transmission members 11 connect the transmission shaft 9 to a drive shaft 12, coaxially housed along the arm 8 in offset position parallel to a rotation axis "X1" of the first roller 6.

The kinematic transmission members 11 can, for example, comprise toothed wheels 13, and are preferably housed in the terminal head 10, removably attached to the arm 8.

The invention is therefore suitable to be advantageously made also fitting already existing machines, replacing the usual upper and lower conveyor members, respectively the second roller 7 and the terminal head 10 carrying the first roller 6.

An electric motor 14, which can be attached to column 3, drives in rotation the drive shaft 12, for example through a reversing linkage, not shown.

In absence of the article of manufacture "M" in processing, the second roller 7 is suitable to be put into contact and in a thrust relationship with the first roller 6 so as to define, in their mutual contact area, a substantially horizontal common tangency plane "T". The size and placing the first roller 6 are chosen such that a common tangency plane "T" is substantially tangential or spaced from arm 8, at least in the vicinity of said end 8a. In other words, the common tangency plane "T" is only slightly external or internal to the arm 8, so that the latter does not significantly interfere with the advancement of the article of manufacture "M" during processing.

The rotation axis "X₁" of the first roller 6 is arranged between the geometric rotation axis "X" of the control shaft 12 and the common tangency plane "T".

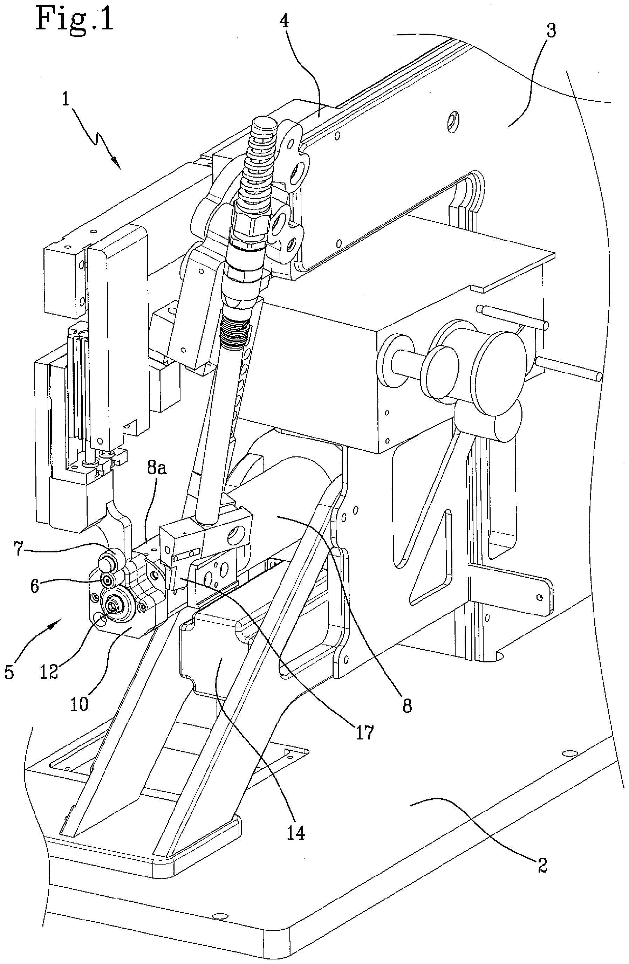

The machine 1 further comprises a feed guide 15, not shown in Figure 1, for example attached to the arm 8, operating near the conveying group 5. The feed guide 15 is suitable to slidably engage a sealable tape "N" through its inlet end 15a, for example facing column 3, for dispensing through an outlet end 15b, located behind the conveying group 5 and facing the first and second rollers 6, 7.

The tape "N", coming for example from a feed coil, is adapted to be suitably shaped and oriented through the feed guide 15 before being coupled to the article of manufacture "M" being processed at the outlet end 15b. More particularly, in the illustrated example, the geometric configuration of the feed guide 15 is such as to impose to tape "N" a U-shape, applying it across the edge of the article of manufacture "M" that progresses to the conveying group 5. To this end, in a per se known manner, the outlet end 15b can define a recess suitable to accommodate the edge of the article of manufacture "M" being processed, while the latter progresses to the conveying group 5.

The outlet end 15b of feeding guide members 15 is located behind the conveyor members 6, preferably brushing against the dragging surface 6a, 7a of at least one of the same, and in any case at a distance approximately not exceeding 5 mm.

To ease the placement of the feed guide 15 behind the first and second rollers 6, 7 as much as possible, the terminal head 10 of the arm 8 may have, along its extension perimeter around the rotational geometric axis "X" of the control shaft 12, a concave portion 16 located behind the first roller 6, upstream thereof with respect to feed direction A of the article of manufacture "M" during processing. When necessary, this concave portion 16 is also suitable to receive the fingers of the operator to facilitate the handling and the guiding precision of the article of manufacture "M" at the rollers 6, 7, during processing.

The heating unit 17 is suitable to operate on the feed guide 15, preferably near its outlet end 15b, to determine the activation of at least one heat-sealable element carried by tape "N", to be coupled to the article of manufacture "M" being processed at the conveying group 5.

During processing the article of manufacture "M" is engaged, for example at its perimeter edge, between the first roller 6, rotatably driven by the motor, and the second roller 7, operating in an elastic thrust relationship towards the first roller 6. Consequently, the article of manufacture "M" driven by rollers 6, 7 advances at a controlled rate through the outlet end 15b of the feed guide 15 and the conveying group 5. At the outlet end 15b, the tape "N, "activated by heating unit 17, is applied to the article of manufacture "M" that progresses towards the conveying group 5, to be subsequently intimately attached to the same upon passage between the first and the second rollers 6, 7.

The operator provides for properly guiding the article of manufacture "M", for example by allowing the edges of the same to translate correctly through the conveying group 5 for the application of the tape "N". In this case, when the edges of the article of manufacture "M" have a curvilinear development, the operator should follow the progress orientating adequately the article of manufacture "M" during the advancement, so that the edges of the same remain continuously engaged between the rollers 6, 7 and properly positioned relative to the outlet end 15b of feed guide 15. The reduced diametrical dimension of rollers 6, 7 remarkably facilitates this task of the operator, because the article of manufacture "M" is suitable to be readily rotated in a horizontal plane and/or refolded around the rotation axis of one or the other roller, without encountering any significant resistance. Further, the reduced diameter "d" of rollers 6, 7 causes the feed guide 15 to be placed with its outlet end 15b immediately behind the rollers themselves, indicatively no more than 20 mm from a plane containing their mutual tangency line and/or their rotation axes "X₁", "X₂". The reduced space between the outlet end 15b and the mutual tangency area of rollers 6, 7 further facilitates the orientation of the article of manufacture "M", facilitating the application of tape "N" also along tortuous paths with many loops and close-radius curves, preventing the stretch of tape "N" extending between the outlet end 15b of the feed guide 15 and the mutual tangency area of rollers 6, 7, which tends to maintain a straight course, from significantly hindering the operation.

Further, the proximity of the feed guide 15 to conveying group 5 prevents undue cooling of tape "N" and an undesired neutralization of the activation of the heatfix agent prior to its transition between rollers 6, 7 of the conveying group 5. Therefore, it is not necessary to impose an excessive heating to the tape "N" from the heating unit 17, thus it is also possible to operate at moderate speeds when paths are particularly tortuous, without the risk of compromising the proper application of tape "N".

## Claims

1. A sealing machine for textile articles of manufacture, comprising:
a conveying group (5) comprising a first conveyor member (6) cooperating with a second conveyor member (7) for translating an article of manufacture ("M") in being processed according to a predetermined feed direction ("A");
wherein said first conveyor member (6) comprises a first roller (6) acting on the article of manufacture ("M") by means of a dragging surface (6a, 7a) having a diameter ("d") smaller than 20 mm,
**characterised in that** the first roller (6) is rotatably engaged at one end (8a) of an arm (8) overhanging from a fixed structure (3), wherein said arm (8) houses a motorized drive shaft (12), offset parallel to a rotation axis ("X₁") of the first roller (6) and operatively connected with the latter by means of kinematic transmission members (11).

2. A machine according to claim 1, wherein the second conveyor member includes a second roller (7).

3. A machine according to claim 2, wherein each of said first (6) and second roller (7) acting on the article of manufacture ("M") being processed by means of a respective dragging surface (6a, 7a) having a diameter ("d") of less than 20 mm.

4. A machine according to one or more of the preceding claims, wherein the first roller (6) is rotatably engaged at the end (8a) of said arm (8), according to a rotation axis ("X₁") parallel to a longitudinal development direction of the arm (8).

5. A machine according to one or more of the preceding claims, wherein the dragging surface (6a) of the first roller (6) has a diameter ("d") smaller than, preferably less than ½ of, a diametrical dimension ("E") of the arm (8) at said end (8a).

6. A machine according to one or more of the preceding claims, wherein said kinematic transmission members (11) comprise toothed wheels (13).

7. A machine according to one or more of the preceding claims, wherein the first roller (6) is operatively carried by a terminal head (10) cantilevered at the end (8a) of the arm (8).

8. A machine according to claim 7, wherein the kinematic transmission members are housed in said terminal head.

9. A machine according to one or more of the preceding claims, wherein the terminal head is removably attached to the arm.

10. A machine according to one or more of the claims 7 to 9, wherein the terminal head (10) has a concave portion (16) positioned close to the first roller (6), upstream of the same with reference to a feed direction ("A") of the article of manufacture ("M") during processing.

11. A machine according to one or more of the preceding claims, wherein a tangency plane ("T") common to the first and second conveyor members (6, 7) in their area of mutual contact is substantially tangent or spaced by said arm (8) in the proximity of said end (8a).

12. A machine according to one or more of the preceding claims, wherein a rotation axis ("X₁") of the first conveyor member (6) is disposed between a geometric rotation axis ("X") of the drive shaft (12) and a tangency plane ("T") common to the first and second conveyor members (6, 7) in an area of mutual contact between them.

13. A machine according to one or more of the preceding claims, further comprising a feeding guide (15) of at least one sealable tape ("N"), having an outlet end (15b) disposed adjacent to the conveyor members (6, 7) and facing the latter.

14. A machine according to claim 13, wherein the outlet end (15b) of the feeding guide (15) is positioned at a distance not exceeding 20 mm from a plane containing the rotation axes ("X₁", "X₂") of the first and second roller (7).

15. A machine according to claim 13 or 14, wherein the outlet end (15b) of the feeding guide (15) is located at a distance of no more than 5 mm from the dragging surface of at least one of the rollers (6, 7).

## Patentansprüche

1. Siegelvorrichtung für Textilerzeugnisse, umfassend:
eine Fördergruppe (5), die ein erstes mit einem zweiten Förderelement (7) kooperierendes Förderelement (6) umfasst, um ein Erzeugnis ("M") bei der Verarbeitung gemäß einer bestimmten Zuführungsrichtung ("A") zu übertragen;
wobei das genannte erste Förderelement (6) eine mittels einer Mitnehmerfläche (6a, 7a) mit einem Durchmesser ("d") von weniger als 20 mm auf das Erzeugnis ("M") wirkende erste Walze (6) umfasst, **dadurch gekennzeichnet, dass** die erste Walze (6) an einem Ende (8a) eines von einer festen Struktur (3) vorstehenden Arms (8) drehbar gekuppelt ist, wobei in dem genannte Arm (8) eine parallel zu einer Drehachse ("X₁") der ersten Walze (6) versetzte und operativ mit Letzterer mittels kinematischer Übertragungselemente (11) verbundene Antriebswelle (12) mit Motorantrieb untergebracht ist.

2. Siegelvorrichtung nach Anspruch 1, bei der das zweite Förderelement eine zweite Walze (7) einschließt.

3. Siegelvorrichtung nach Anspruch 2, bei der die erste (6) und die zweite Walze (7) jeweils mittels einer entsprechenden Mitnehmerfläche (6a, 7a) mit einem Durchmesser ("d") von weniger als 20 mm auf das verarbeitete Erzeugnis ("M") wirken.

4. Siegelvorrichtung nach einem oder mehreren der vorangegangenen Ansprüche, bei der die erste Walze (6) am Ende (8a) des genannten Arms (8) entlang einer Drehachse ("X₁") parallel zu einer Längsverlaufsrichtung des Arms (8) drehbar gekuppelt ist.

5. Siegelvorrichtung nach einem oder mehreren der vorangegangenen Ansprüche, bei der die Mitnehmerfläche (6a) der ersten Walze (6) einen kleineren Durchmesser ("d"), vorzugsweise von weniger als der Hälfte, als eine Durchmesserabmessung ("E") des Arms (8) an dem genannten Ende (8a) aufweist.

6. Siegelvorrichtung nach einem oder mehreren der vorangegangenen Ansprüche, bei der die genannten kinematischen Übertragungselemente (11) Zahnräder (13) umfassen.

7. Siegelvorrichtung nach einem oder mehreren der vorangegangenen Ansprüche, bei der die erste Walze (6) operativ von einem an dem Ende (8a) des Arms (8) freitragenden Abschlusskopf (10) getragen wird.

8. Siegelvorrichtung nach Anspruch 7, bei der die kinematischen Übertragungselemente in dem genannten Abschlusskopf untergebracht sind.

9. Siegelvorrichtung nach einem oder mehreren der vorangegangenen Ansprüche, bei der der Abschlusskopf lösbar an dem Arm angebracht ist.

10. Siegelvorrichtung nach einem oder mehreren der Ansprüche 7 bis 9, bei der der Abschlusskopf (10) einen in der Nähe der ersten Walze (6) positionierten, dieser in Bezug auf eine Zuführungsrichtung ("A") des Erzeugnisses ("M") während der Verarbeitung vorgelagerten konkaven Abschnitt (16) aufweist.

11. Siegelvorrichtung nach einem oder mehreren der vorangegangenen Ansprüche, bei der eine dem ersten und zweiten Förderelement (6, 7) in ihrem Bereich des gegenseitigen Kontakts gemeinsame Tangentialebene ("T") im Wesentlichen tangential ist oder von dem genannten Arm (8) in der Nähe des genannten Endes (8a) in einem Abstand gehalten wird.

12. Siegelvorrichtung nach einem oder mehreren der vorangegangenen Ansprüche, bei der die Drehachse ("X1") des ersten Förderelements (6) zwischen einer geometrischen Drehachse ("X") der Antriebswelle (12) und einer gemeinsamen Tangentialebene ("T") des ersten und zweiten Förderelements (6, 7) in einem Bereich des gegenseitigen Kontakts derselben angeordnet ist.

13. Siegelvorrichtung nach einem oder mehreren der vorangegangenen Ansprüche, die darüber hinaus eine Zuführung (15) mindestens eines siegelbaren Bands ("N") umfasst, die ein an die Förderelemente (6, 7) angrenzendes und zu den Letzteren gerichtetes Ausgangsende (15b) aufweist.

14. Siegelvorrichtung nach Anspruch 13, bei der das Ausgangsende (15b) der Zuführung (15) in einem Abstand von nicht mehr als 20 mm von einer Ebene angeordnet ist, die die Drehachsen ("X1", "X2") der ersten und der zweiten Walze (7) enthält.

15. Siegelvorrichtung nach Anspruch 13 oder 14, bei der das Ausgangsende (15b) der Zuführung (15) in einem Abstand von nicht mehr als 5 mm von der Mitnehmerfläche mindestens einer der Walzen (6, 7) positioniert ist.

## Revendications

1. Machine à sceller de manière étanche pour articles textiles manufacturés, comprenant :
un groupe de transport (5) comprenant un premier élément de transport (6) coopérant avec un deuxième élément de transport (7) pour déplacer un article manufacturé (« M ») en traitement selon une direction d'alimentation prédéterminée (« A ») ;
dans laquelle ledit premier élément de transport (6) comprend un premier rouleau (6) agissant sur l'article manufacturé (« M ») au moyen d'une surface de déplacement (6a, 7a) ayant un diamètre (« d ») inférieur à 20 mm, **caractérisé en ce que** le premier rouleau (6) s'engage en rotation à une extrémité (8a) d'un bras (8) surplombant une structure fixe (3), dans laquelle ledit bras (8) loge un axe d'entrainement motorisé (12), décalé et parallèle à un axe de rotation (« X₁ ») du premier rouleau (6) et connecté de manière fonctionnelle à ce dernier au moyen d'éléments de transmission télématique (11).

2. Machine selon la revendication 1, dans laquelle le deuxième élément de transport comprend un deuxième rouleau (7).

3. Machine selon la revendication 2, dans laquelle chacun desdits premier (6) et deuxième rouleaux (7) agit sur l'article manufacturé (« M ») en traitement au moyen d'une surface de déplacement (6a, 7a) respective ayant un diamètre (« d ») inférieur à 20 mm.

4. Machine selon l'une ou plusieurs des revendications précédentes, dans laquelle le premier rouleau (6) est engagé en rotation à l'extrémité (8a) dudit bras (8), selon un axe de rotation (« X₁ ») parallèle à une direction longitudinale de développement du bras (8).

5. Machine selon l'une ou plusieurs des revendications précédentes, dans laquelle la surface de déplacement (6a) du premier rouleau (6) a un diamètre (« d ») inférieur à, de préférence inférieur à la moitié de, la dimension du diamètre (« E ») du bras à ladite extrémité (8a).

6. Machine selon l'une ou plusieurs des revendications précédentes, dans laquelle lesdits éléments de transmission télématique (11) comprennent des roues dentées (13).

7. Machine selon l'une ou plusieurs des revendications précédentes, dans laquelle le premier rouleau (6) est transporté de manière fonctionnelle par une tête terminale (10) en porte-à-faux à l'extrémité (8a) du bras (8).

8. Machine selon la revendication 7, dans laquelle les éléments de transmission cinématique sont logés dans ladite tête terminale.

9. Machine selon l'une ou plusieurs des revendications précédentes, dans laquelle la tête terminale est attachée au bras de manière amovible.

10. Machine selon l'une ou plusieurs des revendications 7 à 9, dans laquelle la tête terminale (10) a une partie concave (16) positionnée à proximité du premier rouleau (6), en amont de celui-ci par rapport à une direction d'alimentation (« A ») de l'article manufacturé (« M ») pendant le processus.

11. Machine selon l'une ou plusieurs des revendications précédentes, dans laquelle un plan tangentiel (« T ») commun au premier et au deuxième élément de transport (6, 7) dans leur zone de contact mutuel est sensiblement tangent ou distancé par ledit bras (8) à proximité de ladite extrémité (8a).

12. Machine selon l'une ou plusieurs des revendications précédentes, dans laquelle un axe de rotation (« X₁ ») du premier élément de transport (6) est disposé entre un axe de rotation géométrique (« X ») de l'arbre d'entrainement (12) et un plan tangentiel (« T ») commun aux premier et deuxième éléments de transport (6, 7) dans une zone de contact mutuel.

13. Machine selon l'une ou plusieurs des revendications précédentes, comprenant en outre, un guide d'alimentation (15) d'au moins un ruban scellable (« N ») ayant une extrémité de sortie (15b) disposée de manière adjacente aux éléments de transport (6, 7) et faisant face à ces derniers.

14. Machine selon la revendication 13, dans laquelle l'extrémité de sortie (15b) du guide d'alimentation (15) est positionnée à une distance ne dépassant pas 20 mm d'un plan contenant les axes de rotation (« X₁ », « X₂ ») des premier et deuxième rouleaux (7).

15. Machine selon la revendication 13 ou 14, dans laquelle l'extrémité de sortie (15b) du guide d'alimentation (15) se situe à une distance non supérieure à 5 mm de la surface de déplacement d'au moins l'un des rouleaux (6, 7).
